(19) Europäisches Patentamt

European Patent Office

Office européen des brevets

(11) Numéro de publication : **0 343 587 B1**

# (12) FASCICULE DE BREVET EUROPEEN

(45) Date de publication du fascicule du brevet :
**13.05.92 Bulletin 92/20**

(21) Numéro de dépôt : **89109234.8**

(22) Date de dépôt : **23.05.89**

(51) Int. Cl.⁵ : **G01J 1/42,** G01N 21/67

---

(54) **Dispositif de mesure de l'énergie d'un arc électrique.**

---

(30) Priorité : **24.05.88 FR 8806877**

(43) Date de publication de la demande :
**29.11.89 Bulletin 89/48**

(45) Mention de la délivrance du brevet :
**13.05.92 Bulletin 92/20**

(84) Etats contractants désignés :
**BE CH DE FR GB LI NL**

(56) Documents cités :
**DE-U- 7 237 458**
**GB-A- 1 515 290**
**US-A- 3 942 892**
**US-A- 4 641 968**

(73) Titulaire : **ALCATEL FIBRES OPTIQUES**
**35 rue Jean Jaurès, BP 20**
**F-95871 Bezons Cedex (FR)**

(72) Inventeur : **Hakoun, Roland**
**4 place Raspail**
**F-95330 Domont (FR)**
Inventeur : **Repain, Pascal**
**3B, rue H. Penon**
**F-78400 Chatou (FR)**

(74) Mandataire : **Weinmiller, Jürgen et al**
**Lennéstrasse 9 Postfach 24**
**W-8133 Feldafing (DE)**

EP 0 343 587 B1

Jouve, 18, rue Saint-Denis, 75001 PARIS

## Description

La présente invention concerne un dispositif de mesure de l'énergie d'un arc électrique dégagée sous forme de rayonnements lumineux, ultra-violet ou infra-rouge.

On sait actuellement très mal mesurer l'énergie instantanée dégagée dans un arc électrique par des mesures électriques, car il est difficile de séparer l'énergie consommée par l'arc de celle consommée par l'échauffement des électrodes.

La présente invention a pour but de permettre une mesure précise et instantanée de l'énergie d'un arc électrique, à l'aide d'un appareillage simple et peu coûteux à remplacer en cas de sa détérioration par la chaleur de l'arc.

Le dispositif de mesure selon l'invention est caractérisé en ce qu'il comprend

a) un support d'au moins un fibre optique disposé sur la tête d'une électrode de l'arc, en une matière plastique d'une rigidité diélectrique suffisante pour ne pas perturber le fonctionnement de l'arc,

- b) au moins un fibre optique assujettie sur ce support et d'extrémité arrivant à proximité de la pointe de l'électrode,

- c) un connecteur optique recevant d'une part l'autre extrémité de la fibre optique, d'autre part une extrémité d'un câble à fibres optiques de liaison avec une cellule photo-électrique,

- d) une cellule photo-électrique disposée à une distance de l'électrode suffisante pour être à l'abri des perturbations dues à celle-ci,

- e) un organe électronique relié à la cellule photo-électrique et enregistrant et affichant l'énergie dégagée par l'arc.

Il répond en outre de préférence à au moins l'une des caractéristiques suivantes :

– Le support de la fibre optique est fixé à l'électrode par encliquetage sur l'extrémité d'un écrou vissé sur le pourtour fileté de l'électrode.

– Le support de la fibre optique est percé d'au moins une rainure de logement de la fibre optique.

– Il comprend plusieurs fibres optiques réparties régulièrement sur le pourtour du support.

– Le support de la fibre optique est en polyphénylsulfone.

– L'écrou de fixation du support est également en polyphénylsulfone.

– L'organe électronique d'enregistrement est relié à une imprimante.

Il est décrit ci-après, à titre d'exemple et en référence aux figures du dessin annexé, un dispositif de mesure de l'énergie d'un arc électrique selon l'invention.

La figure 1 représente en élévation vu de face un support de fibres optiques autour d'une électrode formant anode.

La figure 2 représente le support de fibres optiques en coupe selon l'axe II-II de la figure 1 et l'électrode.

La figure 3 représente l'ensemble du dispositif.

La figure 4 représente les organes auxiliaires de l'organe électronique de mesure et d'analyse de l'énergie.

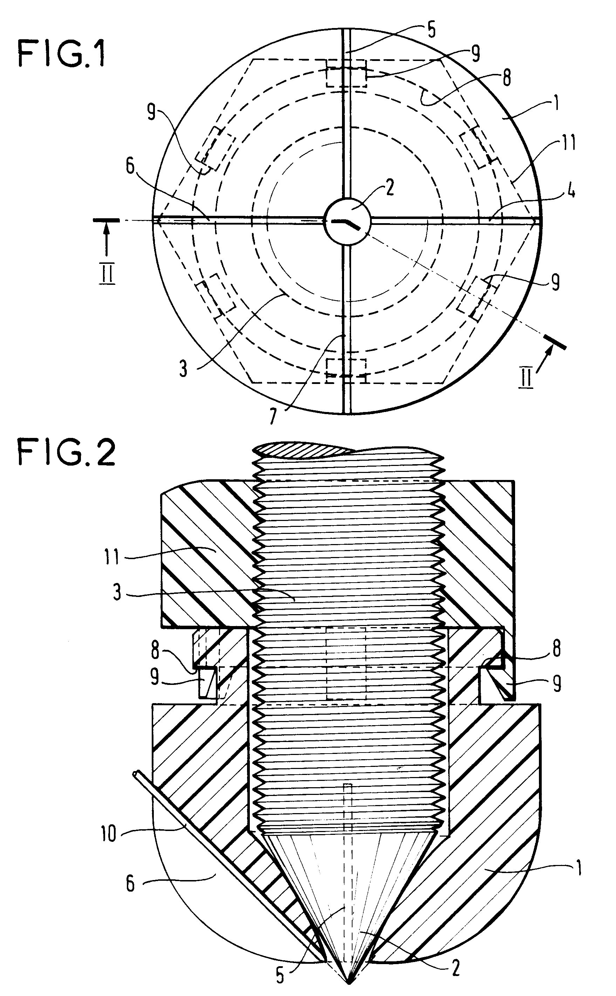

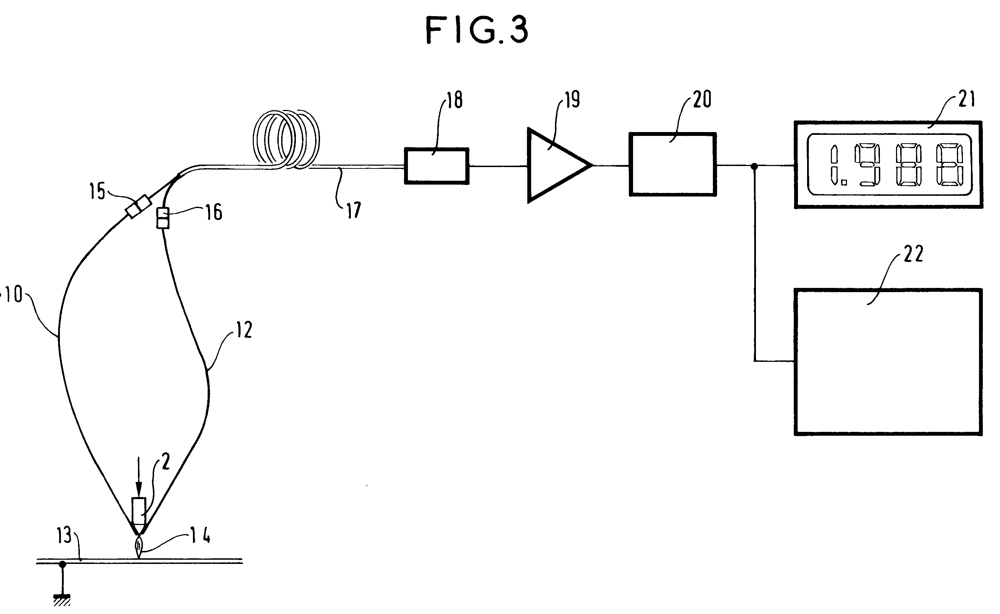

Dans les figures 1 et 2, le support 1 des fibres optiques au voisinage de l'arc est fixé à l'électrode 2 par l'intermédiaire de l'écrou 11, vissé sur le filetage 3 de l'électrode.

Le support repose par son bord sur la tête de l'écrou, il est encliqueté par son épaulement 8 sur des cliquets souples 9 du bord de l'écrou. Le support des fibres et l'écrou sont en une matière plastique de rigidité diélectrique suffisante pour ne pas perturber l'arc, telle qu'un polyphénylsulfone. Les fibres optiques telles que 10 sont disposées dans des rainures 4, 5, 6, 7 à 90° les unes des autres, inclinées à 45° par rapport à l'axe de l'électrode ; elles sont dénudées de leur gaine à proximité immédiate de la pointe de l'électrode, de manière non représentée. Leurs extrémités sont à quelques millimètres de l'arc.

La figure 3 représente l'ensemble du dispositif en cours de fonctionnement. L'arc 14 jaillit entre l'anode 2 et la cathode 13 reliée à la terre. Les fibres optiques, dont seules deux 10 et 12 ont été représentées, parviennent à des connecteurs 15, 16. A partir de ceux-ci des fibres optiques rassemblées dans un câble 17 rejoignent une cellule photo-électrique 18. La distance de cette cellule à l'électrode est de l'ordre de 5 à 10 mètres. Le courant électrique fourni par cette cellule, après amplification dans l'amplificateur 19, est transmis à un appareil enregistreur 20 à carte électronique, qui analyse l'énergie reçue par la cellule. L'enregistreur 20 est relié d'une part à un élément d'affichage 21, d'autre part à une imprimante 22 permettant d'enregistrer les énergies de décharges d'arc successives.

En cas de destruction par l'arc de l'extrémité des fibres optiques sur le support 1, il suffit de remplacer la ou les fibres optiques détruites à partir du ou des connecteurs correspondants.

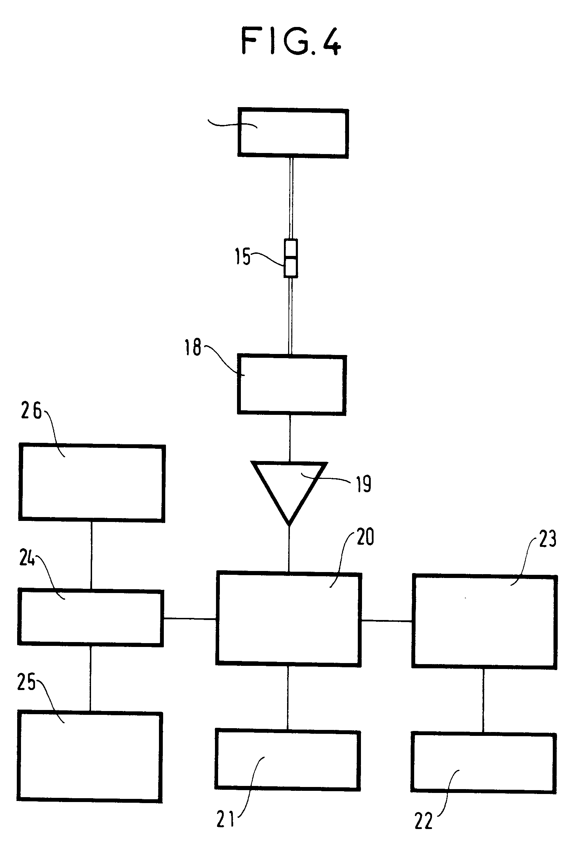

Afin de mettre à l'abri le dispositif de mesure des perturbations du réseau induites par la décharge de l'arc, l'organe électronique de mesure 20 est alimenté par des accumulateurs rechargeables 24 comme représenté en figure 4. Ceux-ci sont reliés à un contrôleur de tension 25 et à une alimentation par le secteur 26, pour leur recharge en dehors des périodes de fonctionnement de l'arc.

L'imprimante 22 est reliée à l'organe de mesure 20 par une interface 23.

## Revendications

1. Dispositif de mesure de l'énergie d'un arc électrique, caractérisé en ce qu'il comprend :

    – a) un support (1) d'au moins une fibre optique disposé sur la tête d'une électrode (2) de l'arc, en une matière plastique d'une rigidité diélectrique suffisante pour ne pas perturber le fonctionnement de l'arc,

    – b) au moins une fibre optique (10) assujettie sur ce support et d'extrémité arrivant à proximité de la pointe de l'électrode,

    – c) un connecteur optique (15, 16) recevant d'une part l'autre extrémité de la fibre optique, d'autre part une extrémité d'un câble à fibres optiques (17) de liaison avec une cellule photo-électrique (18),

    – d) une cellule photo-électrique (18) disposée à une distance de l'électrode suffisante pour être à l'abri des perturbations dues à celle-ci,

    et e) un organe électronique (20) relié à la cellule photo-électrique et enregistrant et affichant l'énergie dégagée par l'arc.

2. Dispositif selon la revendication 1, caractérisé en ce que le support (1) de la fibre optique est fixé à l'électrode (2) par encliquetage sur l'extrémité d'un écrou (11) vissé sur le pourtour fileté (3) de l'électrode.

3. Dispositif selon les revendications 1 ou 2, caractérisé en ce que le support de la fibre optique est percé d'au moins une rainure (4, 5, 6, 7) de logement de la fibre optique.

4. Dispositif selon l'une des revendications 1 à 3, caractérisé en ce qu'il comprend plusieurs fibres optiques réparties régulièrement sur le pourtour du support (1).

5. Dispositif selon l'une des revendications 1 à 4, caractérisé en ce que le support (1) de la fibre optique est en polyphénylsulfone.

6. Dispositif selon la revendication 5, caractérisé en ce que l'écrou (11) de fixation du support est également en polyphénylsulfone.

7. Dispositif selon l'une des revendications 1 à 6, caractérisé en ce que l'organe électronique d'enregistrement (20) est relié à une imprimante (22).

## Patentansprüche

1. Vorrichtung zur Messung der Energie eines Lichtbogens, dadurch gekennzeichnet, daß sie aufweist:

    – a) einen Träger (1) für mindestens eine Lichtleitfaser, der auf dem Kopf einer Lichtbogen-Elektrode (2) angeordnet ist und aus einem Kunststoffmaterial einer ausreichenden dielektrischen Steifheit besteht, um den Betrieb des Bogens nicht zu stören,

    – b) mindestens eine Lichtleitfaser (10), die auf diesem Träger befestigt ist und deren Ende bis in die Nähe der Elektrodenspitze reicht,

    – c) einen optischen Verbinder (15, 16), der das andere Ende der Lichtleitfaser an ein Ende eines Lichtleitfaserkabels (17) anschließt, das eine Verbindung zu einer photoelektrischen Zelle (18) herstellt, empfängt,

    – d) eine photoelektrische Zelle (18), die in einem ausreichenden Abstand zur Elektrode angeordnet ist, um vor den durch diese verursachte Störungen geschützt zu sein,

    und e) ein elektronisches Organ (20), das mit der photoelektrischen Zelle verbunden ist und die vom Lichtbogen ausgesandte Energie registriert und anzeigt.

2. Vorrichtung nach Anspruch 1, dadurch gekennzeichnet, daß der Träger (1) der Lichtleitfaser an der Elektrode (2) durch Aufschnappen auf das Ende einer Mutter (11) befestigt ist, die auf den mit Gewinde versehenen Umfang (3) der Elektrode aufgeschraubt ist.

3. Vorrichtung nach den Ansprüchen 1 oder 2, dadurch gekennzeichnet, daß der Lichtleitfaser-Träger mindestens eine Nut (4, 5, 6, 7) zur Anordnung der Lichtleitfaser aufweist.

4. Vorrichtung nach einem der Ansprüche 1 bis 3, dadurch gekennzeichnet, daß sie mehrere Lichtleitfasern aufweist, die regelmäßig über den Umfang des Trägers (1) verteilt sind.

5. Vorrichtung nach einem der Ansprüche 1 bis 4, dadurch gekennzeichnet, daß der Lichtleitfaser-Träger (1) aus Polyphenylsulfon besteht.

6. Vorrichtung nach Anspruch 5, dadurch gekennzeichnet, daß die Mutter (11) zur Befestigung des Trägers ebenfalls aus Polyphenylsulfon besteht.

7. Vorrichtung nach einem der Ansprüche 1 bis 6, dadurch gekennzeichnet, daß das elektronische Registrierorgan (20) mit einem Drucker (22) verbunden ist.

## Claims

1. A device for measuring the energy of an electric arc, characterized in that it comprises:

    – a) a support (1) for at least one optical fiber, disposed on the tip of an arc electrode (2) and made of a plastic material having sufficient dielectric strength that it will not disturb the operation of the arc,

    – b) at least one optical fiber (2) secured on this support and having an end arriving adjacent to the tip of the electrode,

    – c) an optical connector (15, 16) receiving on the one hand the other end of the optical fiber and on the other hand one end of an optical fiber cable (17) for connecting with a photoelectric cell (18),

    – d) a photoelectric cell (18) disposed at a sufficient distance from the electropde to be immune to disturbances due thereto, and

e) an electronic means (20) connected to the photelectric cell and recording and displaying the energy supplied by the arc.

2. A device according to claim 1, characterized in that the optical fiber support (1) is secured to the electrode (2) by snapping on the end of a nut (11) screwed onto the threaded periphery (3) of the electrode.

3. A device according to claim 1 or 2, characterized in that the optical fiber support is provided with at least one groove (4, 5, 6, 7) for housing the optical fiber.

4. A device according to one of claims 1 to 3, characterized in that a plurality of optical fibers are regularly distributed around the periphery of the support (1).

5. A device according to one of claims 1 to 4, characterized in that the optical fiber support (1) is made of polyphenylsulfone.

6. A device according to claim 5, characterized in that the support fixing nut (11) is also made of polyphenylsulfone.

7. A device according to any one of claims 1 through 6, characterized in that the electronic recording means (20) is connected to a printer (22).

# FIG.1

# FIG.2

# FIG.3

EP 0 343 587 B1

# FIG.4

15

18

26

24

25

19

20

21

23

22